# EUROPEAN PATENT SPECIFICATION

(11) **EP 4 353 794 B1**
(45) Date of publication and mention of the grant of the patent: **14.05.2025**
(21) Application number: 22837635.6
(22) Date of filing: 04.07.2022
(51) Int. Cl.: C09J 11/06, C09J 153/02, C09J 7/38, C09J 7/21

(54) **PRESSURE-SENSITIVE ADHESIVE TAPE**
DRUCKEMPFINDLICHES KLEBEBAND
RUBAN AUTOADHÉSIF

(30) Priority: 09.07.2021 JP 2021114312; 24.03.2022 JP 2022048280
(43) Date of publication of application: 17.04.2024
(73) Proprietor: Denka Company Limited, Tokyo 103-8338 (JP)
(72) Inventor: KIMURA, Akiyoshi, Tokyo 103-8338 (JP); YAMAMOTO, Yoshiaki, Tokyo 103-8338 (JP); YOSHIMURA, Daisuke, Tokyo 103-8338 (JP)
(74) Representative: Gulde & Partner
(86) International application number: PCT/JP2022/026549
(87) International publication number: WO 2023/282219

(56) References cited:
- WO-A1-2015/068610
- WO-A1-2021/065662
- JP-A- 2013 216 852
- JP-A- 2016 060 847
- JP-A- 2017 186 487
- JP-A- H0 195 175
- JP-A- H09 111 199
- JP-A- S56 163 174
- US-A1- 2013 244 013

## Description

### Technical Field

The present invention relates to an adhesive tape.

### Background Art

In various industrial fields such as home appliances, automobiles, and construction, adhesive tapes are used, for example, to join various assembly parts.

Acryl-based adhesives and rubber-based adhesives are cited as an example of an adhesive used for the adhesive tape, and the acryl-based adhesives are widely used.

As a rubber-based adhesive, disclosed in Patent Literature 1 is an adhesive composition containing a base polymer consisting of a block copolymer of a monovinyl-substituted aromatic compound and a conjugated diene compound, and an adhesion-imparting resin (TH) with a hydroxyl value of 80 mgKOH/g or higher.

In addition, disclosed in Patent Literature 2 is a hot melt composition containing a styrene-based block copolymer (A) and a liquid softener (B), in which the styrene-based block copolymer (A) is a hydrogenated styrene-based thermoplastic elastomer, the hot melt composition has a viscosity ratio (η1/η2) where η1 is a melt viscosity at 140°C and η2 is a melt viscosity 180°C, and the melt viscosity at 180°C is in a specific range.

Further, disclosed in Patent Literature 3 is a hot melt adhesive, comprising a styrene-based thermoplastic elastomer A, an adhesion-imparting resin B, a plasticizer C, and a vinyl copolymer D having an ethylene-carbonyl bond, in which a ratio represented by D/C is 0.10 to 0.80, where C is parts by mass of the plasticizer C, and D is parts by mass of the vinyl copolymer D having the ethylene-carbonyl bond. Moreover, Patent Literature 4 discloses a double-faced pressure-sensitive adhesive sheet comprising a foam substrate, pressure sensitive adhesive layers provided on a first face and a second face of the foam substrate, and having an overall thickness of 400 µm or smaller. At least one of the pressure-sensitive adhesive layers is constituted with a rubber-based pressure-sensitive adhesive comprising, as a base polymer, a block copolymer of a mono-vinyl-substituted aromatic compound and a conjugated diene compound. Patent Literature 5 relates to a hot melt adhesive composition, including: a styrene-based block copolymer; a tackifier; and a plasticizer; wherein: the styrene-based block copolymer is a styrene-butadiene block copolymer and a butadiene portion thereof is partially hydrogenated; the tackifier is contained by 65 to 190 parts by mass with respect to 100 parts by mass of the styrene-based block copolymer; and the plasticizer is contained by 0.1 to 24 parts by mass with respect to 100 parts by mass of the styrene-based block copolymer.

### Citation List

### Patent Literature

[Patent Literature 1] JP-A-2013-216853
[Patent Literature 2] JP-A-2019-116608
[Patent Literature 3] JP-A-2020-203977
[Patent Literature 4] US 2013/0244013 A1
[Patent Literature 5] WO 2021/065662 A1

### Summary of Invention

### Technical Problem

However, conventional rubber-based adhesives sometimes did not have sufficient adhesive force to a material which is difficult to be adhered with an acrylic adhesive, such as an olefin-based material. In addition, an adhesive property may decrease at a high temperature, resulting in insufficient heat resistance.

The present invention has been made by taking such circumstances into consideration, and aims to provide an adhesive tape having adhesive force to an olefin-based material at a high temperature and a good adhesive property at a high temperature.

### Solution to Problem

According to the present invention, provided is an adhesive tape comprising an adhesive layer containing an adhesive composition, wherein: the adhesive composition contains a styrene-butadiene-based block copolymer, a first tackifier, a second tackifier, and a third tackifier; a butadiene portion of the styrene-butadiene-based copolymer is partially hydrogenated; a content of a styrene-derived monomer unit of the styrene-butadiene-based copolymer is 24 mass% or more; in GPC measurement, the styrene-butadiene-based copolymer contains a component (a) having a peak top molecular weight of 200000 or higher and 400000 or lower, measured by the method disclosed in the description, and a component (b) having a peak top molecular weight of 100000 or higher and lower than 200000; the first tackifier is a terpene-based resin which is liquid at 23°C; the second tackifier has a softening point of 70 to 120°C, measured in accordance with the softening point test method (ring and ball method) stipulated in JIS K5902 and JIS K2207; the third tackifier is a terpene phenolic resin having a softening point of 140°C or higher; and the adhesive tape comprises a nonwoven fabric coated with the adhesive composition by hot-melt coating, the nonwoven fabric containing rayon.

The inventors have conducted intensive studies, and have found that, in an adhesive tape comprising an adhesive layer containing an adhesive composition, the adhesive tape having high adhesive force to an olefin-based material and a good adhesive property at a high temperature can be obtained by blending a styrene-butadiene-based block copolymer, a first tackifier, a second tackifier, and a third tackifier to the adhesive composition, by using a styrene-butadiene-based block copolymer in which a butadiene portion is partially hydrogenated as the styrene-butadiene-based block copolymer and by stipulating the content and molecular weight of the styrene-derived monomer unit, leading to the completion of the present invention.

Hereinafter, various embodiments of the present invention are exemplified. The following embodiments can be combined with each other.

According to one embodiment of the invention a thickness of the nonwoven fabric containing rayon may be 30 to 50 µm. According to a further embodiment of the invention a coating amount of the adhesive composition may be 60 g/m² or more per side.

### Advantageous Effects of Invention

According to the adhesive tape of the present invention, an adhesive tape having high adhesive force to an olefin-based material at a high temperature and a good adhesive property at a high temperature can be obtained. The adhesive tape according to the present invention can be used in various industrial fields such as home appliances, automobiles, and construction, to adhere various components to each other more reliably and at lower cost by taking advantage of its characteristics. Because of the above-mentioned features, the adhesive tape according to one embodiment of the present invention can be preferably used, for example, to fix parts around doors, ceilings, trunk rooms, and instrument panels of automobiles, to fix interior parts in the automotive field such as assembly around air conditioners and car navigation systems, and for office automation equipment and home appliances.

### Brief Description of Drawings

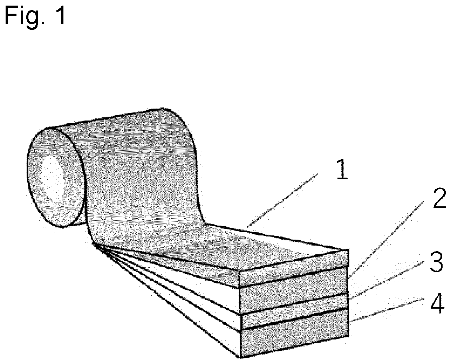

Fig. 1 is a schematic drawing of the adhesive tape according to one embodiment of the present invention.

### Description of Embodiments

Hereinafter, the embodiments of the present invention are exemplified to explain the details of the present invention. The present invention is not limited at all by these descriptions. Various distinctive features shown in the following embodiments can be combined with each other. In addition, an invention can be established independently for each of the distinctive features.

### 1. Adhesive Composition

The adhesive tape according to the present invention comprises an adhesive layer containing an adhesive composition. The adhesive composition according to the present invention contains a styrene-butadiene-based block copolymer, a first tackifier, a second tackifier, and a third tackifier.

In the present invention, tackifier refers to an adhesion-imparting agent, which is a thermoplastic resin added to enhance adhesiveness indicating that it is liquid or solid at normal temperature. Specific examples of the tackifier include rosin-based, terpene-based, and petroleum-based tackifiers.

### 1.1 Styrene-butadiene-based Block Copolymer

The styrene-butadiene-based block copolymer according to the present invention means a block copolymer containing a block having a styrene-derived monomer unit and a block having a butadiene-derived monomer unit.

Two or more kinds of the styrene-butadiene-based block copolymers according to the present invention can also be used in combination. For example, adhesive force, heat resistance, and melt viscosity can be adjusted within appropriate ranges by appropriately selecting and combining the styrene-butadiene-based block copolymers having different peak tops, weight average molecular weights, or molecular weight distributions, different MFRs, different styrene-derived monomer unit contents, or different diblock copolymer contents.

Hereinafter, the styrene-butadiene-based block copolymer according to one embodiment of the present invention will be described. First, the characteristics of the styrene-butadiene-based block copolymer (as a whole), which is contained in the adhesive composition of the present invention and may contain a plurality kind of the styrene-butadiene-based block copolymers, are described. Then, the styrene-butadiene-based block copolymer A and the styrene-butadiene-based block copolymer B, which may be contained in the styrene-butadiene-based block copolymer, are described.

The content of the styrene-derived monomer unit of the styrene-butadiene-based block copolymer according to one embodiment of the present invention is 24 mass% or more. The content of the styrene-derived monomer unit is, specifically for example, 24, 25, 26, 27, 28, 29, 30, 35, 40, 45, or 50 mass%, and may be in the range between the two values exemplified herein. By making the content of the styrene-derived monomer unit within such a range, the obtained adhesive tape will have moderate adhesive force and heat resistance. The content of the styrene-derived monomer unit can be measured based on JIS K6383. Here, The content of the monomer unit derived from styrene in the styrene-butadiene-based block copolymer means the content of monomer unit derived from styrene in all the styrene-butadiene-based block copolymers contained in the adhesive composition according to the present invention. For example, when the adhesive composition according to the present invention contains the styrene-butadiene-based block copolymer A and the styrene-butadiene-based block copolymer B, the content of the monomer unit derived from styrene in the styrene-butadiene-based block copolymer means the total of the content of the monomer unit derived from styrene contained in the styrene-butadiene-based block copolymer A and the content of the monomer unit derived from styrene contained in the styrene-butadiene-based block copolymer B.

The styrene-butadiene-based block copolymer according to the present invention has a butadiene portion partially hydrogenated. Preferably, 20 to 90 mass% of the butadiene portion of the styrene-butadiene-based block copolymer is hydrogenated, and more preferably, 30 to 80 mass% of the butadiene portion of the styrene-butadiene-based block copolymer is hydrogenated.

Specific examples of the styrene-butadiene-based block copolymer having the butadiene portion partially hydrogenated include styrene-butadiene-butylene-styrene block copolymers (SBBS).

The styrene-butadiene-based block copolymer according to the present invention preferably contains a triblock copolymer containing: a block α containing the styrene-derived monomer unit; a block β containing the butadiene-derived monomer unit; and a block γ containing the styrene-derived monomer unit.

In addition, the styrene-butadiene-based block copolymer according to the present invention preferably contains a diblock copolymer containing: the block α containing the styrene-derived monomer unit; and the block β containing the butadiene-derived monomer unit.

Here, it is preferable that the block β containing the butadiene-derived monomer unit be partially hydrogenated. In other words, the block β containing the butadiene-derived monomer unit preferably has a butadiene block and a butylene block.

The styrene-butadiene-based block copolymer according to the present invention preferably contains 50 to 85 mass%, and more preferably contains 55 to 80 mass% of the above-mentioned diblock copolymer, per 100 mass% of the styrene-butadiene-based block copolymer. The content of the above-mentioned diblock copolymer is, specifically for example, 50, 55, 60, 65, 70, 75, 80, or 85 mass%, and may be in the range between the two values exemplified herein. By making the content of the diblock copolymer within the above-mentioned range, the adhesive composition having moderate tack can be obtained.

The styrene-butadiene-based block copolymer contains a component (a) having a peak top molecular weight of 200000 or higher and 400000 or lower, and a component (b) having a peak top molecular weight of 100000 or higher and 200000 or lower in GPC (gel permeation chromatography) measurement. In GPC measurement, containing the component (a) having a peak top molecular weight of 200000 or higher and 400000 or lower and the component (b) having a peak top molecular weight of 100000 or higher and 200000 or lower means that there are peaks in the spectrum obtained by GPC measurement, in which the molecular weight of a peak top is 200000 or higher and 400000 or lower, and the molecular weight of another peak top is 100000 or higher and 200000 or lower.

The peak top molecular weight of the component (a) is, for example, 200000, 210000, 220000, 230000, 240000, 250000, 260000, 270000, 280000, 290000, 300000, 310000, 320000, 330000, 340000, 350000, 360000, 370000, 380000, 390000, or 400000, and may be in the range between the two values exemplified herein.

The peak top molecular weight of the component (b) is, for example, 100000, 110000, 120000, 130000, 140000, 150000, 160000, 170000, 180000, 190000, or lower than 200000, and may be in the range between the two values exemplified herein.

By adjusting the above-described components (a) and (b), an adhesive tape having an excellent balance between the adhesive force to an olefin-based material and the adhesive force at a high temperature can be obtained.

The styrene-butadiene-based block copolymer may have components other than the component (a) having the peak top molecular weight of 200000 or higher and lower than 400000, and the component (b) having the peak top molecular weight of 100000 or higher and lower than 200000 in GPC measurement. As an example, the styrene-butadiene-based block copolymer may further have the component having the peak top molecular weight of 5000 or higher and lower than 100000, such as 5000, 10000, 20000, 30000, 40000, 50000, 60000, 70000, 80000, 90000, or lower than 100000, and may have the component having the peak top molecular weight in the range between the two values exemplified herein.

The styrene-butadiene-based block copolymer having the above-described molecular weight distribution can be obtained, for example, by appropriately selecting and combining two or more kinds of the styrene-butadiene-based block copolymers having different peak top molecular weights, weight average molecular weights, or molecular weight distributions.

The styrene-butadiene-based block copolymer according to one embodiment of the present invention can contain two or more kinds of the styrene-butadiene-based block copolymers. For example, it can contain two, three, four, or five kinds of the styrene-butadiene-based block copolymers.

The styrene-butadiene-based block copolymer according to one embodiment of the present invention can contain the styrene-butadiene-based block copolymer A and the styrene-butadiene-based block copolymer B, of which the peak top molecular weights can be different. The styrene-butadiene-based block copolymer A can contain the styrene-butadiene-based block copolymer having the peak top molecular weight of 200000 or higher, and the styrene-butadiene-based block copolymer B can contain the styrene-butadiene-based block copolymer having the peak top molecular weight of 100000 or higher and lower than 200000.

### <Styrene-butadiene-based Block Copolymer A>

The styrene-butadiene-based block copolymer A according to one embodiment of the present invention contains the styrene-butadiene-based block copolymer having the peak top molecular weight of 200000 or higher and 400000 or lower. The styrene-butadiene-based block copolymer A according to one embodiment of the present invention may contain a plurality of the styrene-butadiene-based block copolymers, and may contain the styrene-butadiene-based block copolymer having the peak top molecular weight outside the above-described numerical range, in addition to the styrene-butadiene-based block copolymer having the peak top molecular weight of 200000 or higher and 400000 or lower. The styrene-butadiene-based block copolymer A according to one embodiment of the present invention has the butadiene portion partially hydrogenated. It is preferable that 20 to 90 mass% of the styrene-butadiene-based block copolymer A be hydrogenated, and it is more preferable that 30 to 80 mass% of the styrene-butadiene-based block copolymer A be hydrogenated.

Specific examples of the styrene-butadiene-based block copolymer in which the butadiene portion is partially hydrogenated include the styrene-butadiene-butylene-styrene block copolymer (SBBS). The hydrogenation ratio can be analyzed by H-NMR composition analysis from the peak of the hydrogenated butadiene and the peaks derived from other monomer units.

The styrene-butadiene-based block copolymer A according to the present invention preferably contains the triblock copolymer that contains the block α containing the styrene-derived monomer unit, the block β containing the butadiene-derived monomer unit, and the block γ containing the styrene-derived monomer unit. In addition, the styrene-butadiene block copolymer according to the present invention preferably contains the diblock copolymer containing the block α containing styrene-derived monomer unit, and the block β containing the butadiene-derived monomer unit.

Here, it is preferable that the block β containing the butadiene-derived monomer unit be partially hydrogenated. In other words, it is preferable that the block β containing the butadiene-derived monomer unit have the butadiene block and the butylene block.

The styrene-butadiene block copolymer according to the present invention preferably contains 50 to 85 mass%, more preferably contains 55 to 80 mass% of the above-described diblock copolymer, per 100 mass% of the styrene-butadiene-based block copolymer. The content of the above-described diblock copolymer is, specifically for example, 50, 55, 60, 65, 70, 75, 80, or 85 mass%, and may be in the range between the two values exemplified herein.

The content of the styrene-derived monomer unit of the styrene-butadiene-based block copolymer A according to one embodiment of the present invention is more than 20 mass%. The content of the styrene-derived monomer unit of the styrene-butadiene-based block copolymer A is, for example, more than 20, 25, 30, 35, 40, 45, or 50 mass%, and may be in the range between the two values exemplified herein.

The styrene-butadiene-based block copolymer A according to one embodiment of the present invention preferably contains the styrene-butadiene-based block copolymer having the peak top molecular weight of 200000 or higher and 400000 or lower. In other words, the styrene-butadiene-based block copolymer A according to one embodiment of the present invention preferably contains the component having the peak top molecular weight of 200000 or higher and 400000 or lower in GPC measurement. The styrene-butadiene-based block copolymer A can contain the component having the peak top molecular weight, such as 200000, 210000, 220000, 230000, 240000, 250000, 260000, 270000, 280000, 290000, 300000, 310000, 320000, 330000, 340000, 350000, 360000, 370000, 380000, 390000, or 400000, and may contain the component having the peak top molecular weight in the range between the two values exemplified herein. The styrene-butadiene-based block copolymer A can contain the component of which the peak top molecular weight is outside the above-described numerical range. As an example, the styrene-butadiene-based block copolymer may further have the component having the peak top molecular weight of 10000 or higher and lower than 100000, such as 10000, 20000, 30000, 40000, 50000, 60000, 70000, 80000, 90000, or lower than 100000, and may have the component having the peak top molecular weight in the range between the two values exemplified herein.

The styrene-butadiene-based block copolymer A according to one embodiment of the present invention preferably has an MFR measured of 10 g/10min measured at 200°C and under 5 kgf.

The MFR of the styrene-butadiene-based block copolymer A measured at 200°C and under 5 kgf is, for example, 1, 2, 3, 4, 5, 6, 7, 8, 9 g/10min, or lower than 10 g/10min, and may be in the range between the two values exemplified herein.

### <Styrene-butadiene-based Block Copolymer B>

The styrene-butadiene-based block copolymer B according to one embodiment of the present invention can contain the styrene-butadiene-based block copolymer having the peak top molecular weight of 100000 or higher and lower than 200000. The styrene-butadiene-based block copolymer B according to one embodiment of the present invention may contain a plurality of the styrene-butadiene-based block copolymers, and may contain the styrene-butadiene-based block copolymer having the peak top molecular weight of lower than 100000 or higher than 200000, in addition to the styrene-butadiene-based block copolymer having the peak top molecular weight of 100000 or higher and lower than 200000. The styrene-butadiene-based block copolymer B according to one embodiment of the present invention has the butadiene portion partially hydrogenated. It is preferable that 20 to 90 mass% of the styrene-butadiene-based block copolymer B be hydrogenated. It is more preferable that 30 to 80 mass% of the styrene-butadiene-based block copolymer B be hydrogenated.

Specific example of the styrene-butadiene block copolymer in which the butadiene portion is partially hydrogenated include the styrene-butadiene-butylene-styrene block copolymer (SBBS).

The styrene-butadiene-based block copolymer B according to the present invention preferably contains the triblock copolymer that contains the block α containing the styrene-derived monomer unit, the block β containing the butadiene-derived monomer unit, and the block γ containing the styrene-derived monomer unit.

In addition, the styrene-butadiene-based block copolymer according to the present invention preferably contains the diblock copolymer that contains the block α containing the styrene-derived monomer unit, and the block β containing the butadiene-derived monomer unit.

Here, it is preferable that the block β containing the butadiene-derived monomer unit be partially hydrogenated. In other words, the block β containing the butadiene-derived monomer unit preferably has the butadiene block and the butylene block.

The styrene-butadiene-based block copolymer according to the present invention preferably contains 50 to 85 mass%, and more preferably contains 55 to 80 mass% of the above-mentioned diblock copolymer, per 100 mass% of the styrene-butadiene-based block copolymer. The content of the above-mentioned diblock copolymer is, specifically for example, 50, 55, 60, 65, 70, 75, 80, or 85 mass%, and may be in the range between the two values exemplified herein.

The content of the styrene-derived monomer unit of the styrene-butadiene-based block copolymer B according to one embodiment of the present invention is more than 20 mass%. The content of the styrene-derived monomer unit of the styrene-butadiene-based block copolymer B is, for example, more than 20, 25, 30, 35, 40, 45, 50, 55, 60, 65, 70, 75, or 80 mass%, and may be in the range between the two values exemplified herein.

The styrene-butadiene-based block copolymer B according to one embodiment of the present invention preferably contains the styrene-butadiene-based block copolymer having the peak top molecular weight of 100000 or higher and lower than 200000. In other words, the styrene-butadiene-based block copolymer B according to one embodiment of the present invention preferably contains the component having the peak top molecular weight of 100000 or higher and lower than 200000 in GPC measurement. The styrene-butadiene-based block copolymer B can contain the component having the peak top molecular weight, such as 100000, 110000, 120000, 130000, 140000, 150000, 160000, 170000, 180000, 190000, or lower than 200000, and may contain the component having the peak top molecular weight in the range between the two values exemplified herein. The styrene-butadiene-based block copolymer B can contain the component of which the peak top molecular weight is outside the above-described numerical range. As an example, the styrene-butadiene-based block copolymer may further have the component having the peak top molecular weight of 5000 or higher and lower than 100000, such as 5000, 10000, 20000, 30000, 40000, 50000, 60000, 70000, 80000, 90000, or lower than 100000, and may have the component having the peak top molecular weight in the range between the two values exemplified herein.

The styrene-butadiene-based block copolymer B according to one embodiment of the present invention preferably has an MFR measured of 10 g/10min measured at 200°C and under 5 kgf.

The MFR of the styrene-butadiene-based block copolymer B measured at 200°C and under 5 kgf is, for example, 10, 12, 13, 14, 15, 16, 17, 18, 19, or 20 g/10min, and may be in the range between the two values exemplified herein.

### 1.2 First Tackifier

The adhesive composition according to the present invention contains the first tackifier. The first tackifier is a terpene-based resin which is liquid at 23°C. The adhesive composition according to the present invention can contain one kind of the first tackifier alone, or two or more kinds of the first tackifiers in combination. Examples of the terpene-based resin include products available from YASUHARA CHEMICAL CO., LTD., such as Daimaron (liquid terpene resin, flash point: 174°C), YS Resin CP (liquid terpene resin, flash point: 178°C), YS Resin PX300N (terpene resin, flash point: 202°C), YS Polyster T30 (terpene phenolic resin, flash point: 205°C), and YS Resin LP (aromatic modified terpene resin, flash point: 220°C). Among these, YS Resin LP can be preferably contained in the adhesive composition because of its high flash point, low heating loss, and high compatibility with the styrene-butadiene-based block copolymer according to the present invention.

The viscosity at 25°C of the terpene-based resin which is liquid at 23°C is preferably 500 to 150000 cp, and more preferably 1000 to 100000 cp. The viscosity at 25°C is, for example, 500, 1000, 2000, 5000, 10000, 20000, 50000, 100000, 120000, or 150000 cp, and may be in the range between the two values exemplified herein.

### 1.3 Second tackifier

The softening point of the second tackifier is 70 to 120°C. The softening point of the second tackifier is preferably 80 to 120°C, and more preferably 85 to 115°C. The softening point is, specifically for example, 70, 75, 80, 85, 90, 95, 100, 105, 110, 115, or 120°C, and may be in the range between the two values exemplified herein. One kind of the second tackifier satisfying the above-mentioned condition can be used alone, or two or more kinds of the second tackifier satisfying the above-mentioned condition can be used in combination.

As the second tackifier, C9 petroleum resins, hydrogenated C9 petroleum resins, C5 petroleum resins, alicyclic petroleum resins, alicyclic/aromatic petroleum resins, rosin-based resins (polymerized rosin esters, modified polymerized rosin esters, stabilized rosin esters, etc.), terpene-based resins (terpene resins, aromatic modified terpene resins, terpene phenolic resins, hydrogenated terpene phenolic resins, etc.) and the like can be used. In the present invention, the second tackifier is preferably at least one selected from the terpene-based resins because of good adhesiveness. From the viewpoint of imparting good tack, the second tackifier preferably contains a terpene resin.

### 1.4 Third Tackifier

The third tackifier is a terpene phenolic resin having a softening point of 140°C or higher. The softening point of the third tackifier is preferably 140 to 180°C, and more preferably 140 to 170°C. The softening point is, specifically for example, 140, 145, 150, 155, 160, 165, 170, 175, or 180°C, and may be in the range between the two values exemplified herein. As the third tackifier, one kind of the terpene-based resin having the softening point of 140°C or higher can be used alone, or two or more kinds of the terpene-based resins having the softening point of 140°C or higher can be used in combination.

The third tackifier is a terpene phenolic resin. It is preferably a terpene phenolic resin from the viewpoint of the excellent balance between melt viscosity and adhesive force at a high temperature. In particular, the third tackifier preferably contains the terpene phenolic resin from the viewpoint of obtaining the adhesive composition having low melt viscosity with which coating is easily performed.

The adhesive composition according to one embodiment of the present invention may contain the tackifier having a softening point of 140°C or higher, other than the terpene phenolic resin. Examples of the tackifier having a softening point of 140°C or higher other than the terpene phenolic resin include resins having a softening point of 140°C or higher, such as C9 petroleum resins, hydrogenated C9 petroleum resins, C5 petroleum resins, alicyclic petroleum resins, alicyclic/aromatic petroleum resins, terpene-based resins (terpene resins, aromatic modified terpene resins, hydrogenated terpene phenolic resins, etc., except terpene phenolic resins), rosin-based resins (polymerized rosin esters, modified polymerized rosin esters, stabilized rosin esters, etc.), and alkyl phenol compounds. The adhesive composition according to one embodiment of the present invention is the tackifier having a softening point of 140°C or higher, and may not contain the tackifier other than the terpene phenolic resin.

The softening point of the tackifier can be defined as the value measured in accordance with the softening point test method (ring and ball method) stipulated in JIS K5902 and JIS K2207. Specifically, the sample is promptly melted at as low a temperature as possible and filled into a ring placed on a flat metal plate, taking care to avoid the formation of bubbles. After cooling, a slightly heated knife is used to cut off the portion protruding from the plane including the upper end of the ring. Next, a support (ring base) is placed in a glass container (heating bath) having a diameter of 85 mm or more and a height of 127 mm or more, and glycerin is poured until its depth becomes 90 mm or more. Next, a steel ball (9.5 mm in diameter, 3.5 g in weight) and the ring filled with the sample are immersed in the glycerin such that they do not touch each other, and the temperature of the glycerin is maintained at 20±5°C for 15 minutes. The steel ball is then placed on the center of the surface of the sample in the ring, and this is placed in a fixed position on the support. Next, the distance from the upper end of the ring to the glycerin surface is kept at 50 mm, a thermometer is placed, the center of the mercury sphere of the thermometer is positioned at the same height as the center of the ring, and the container is heated. The flame of the Bunsen burner used for heating is made in contact with the intermediate portion between the center and the edge of the container bottom for uniform heating. The rate of increase in the bath temperature after it reaches 40°C starting from the heating can be 5.0±0.5°C per minute. The temperature at which the sample gradually softens, flows down from the ring, and finally comes in contact with the bottom plate can be read as the softening point. Two or more softening point measurements can be made at the same time, and the average value thereof can be adopted.

In addition, since the softening point is approximately 50°C above the glass transition point of the tackifier, the softening point can be estimated by detecting Tg using a DSC (differential scanning calorimeter). As the method for identifying the softening point of the tackifier using this technique, there is a method in which the tackifier component in the adhesive is isolated using preparative HPLC, and the Tg was measured from the DSC measurement result of the isolated sample to estimate the softening temperature.

### 1.5 Content of Each Component

The adhesive composition according to one embodiment of the present invention contains the styrene-butadiene-based block copolymer, the first tackifier, the second tackifier, and the third tackifier, and the contents of each component are not particularly limited. As an example, the adhesive composition according to one embodiment of the present invention is easily made into the adhesive tape having high adhesive force to an olefin-based material and high adhesive force at a high temperature by making the contents of each component within the numerical ranges described below, albeit depending on the kind of each component.

The adhesive composition according to one embodiment of the present invention preferably contains 45 to 55 parts by mass of the styrene-butadiene-based block copolymer, per 100 parts by mass of the adhesive composition. The content of the styrene-butadiene-based block copolymer is, specifically for example, 45, 46, 47, 48, 49, 50, 51, 52, 53, 54, or 55 parts by mass, and may be in the range between the two values exemplified herein.

The adhesive composition according to one embodiment of the present invention preferably contains 5 to 15 parts by mass of the first tackifier, per 100 parts by mass of the adhesive composition. The content of the first tackifier is, specifically for example, 5, 6, 7, 8, 9, 10, 11, 12, 13, 14, or 15 parts by mass, and may be in the range between the two values exemplified herein.

The adhesive composition according to one embodiment of the present invention preferably contains 10 or more parts by mass, more preferably 10 to 40 parts by mass, and even more preferably 15 to 25 parts by mass of the second tackifier, per 100 parts by mass of the adhesive composition. The content of the second tackifier is, specifically for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by mass, and may be in the range between the two values exemplified herein.

The adhesive composition according to one embodiment of the present invention preferably contains 10 to 30 parts by mass, and more preferably contains 15 to 25 parts by mass of the third tackifier, per 100 parts by mass of the adhesive composition. The content of the third tackifier is, for example, 10, 11, 12, 13, 14, 15, 16, 17, 18, 19, 20, 21, 22, 23, 24, 25, 26, 27, 28, 29, or 30 parts by mass, and may be in the range between the two values exemplified herein.

The adhesive composition according to one embodiment of the present invention preferably contains 45 to 55 parts by mass of the styrene-butadiene-based block copolymer, 5 to 15 parts by mass of the first tackifier, 10 to 40 parts by mass of the second tackifier, and 10 to 30 parts by mass of the third tackifier, per 100 parts by mass of the adhesive composition.

The adhesive composition according to one embodiment of the present invention is easily made into the adhesive tape having higher adhesive force to an olefin-based material and higher adhesive force at a high temperature by making the contents of each component within the above-described numerical ranges.

### 1.6 Other Components

In addition to the above-described components, the adhesive composition according to the present invention may contain various additives such as plasticizers, antioxidants, ultraviolet absorbers, stabilizers, fillers, modifiers, and the like to the extent that the effect of the present invention is not hindered.

### (Plasticizer)

The adhesive composition according to one embodiment of the present invention can contain a plasticizer. The adhesive composition according to one embodiment of the present invention preferably contains less than 4 parts by mass of the plasticizer, per 100 parts by mass of the adhesive composition. The content of the plasticizer is, specifically for example, 0.5, 1.0, 1.5, 2.0, 2.5, 3.0, 3.5 parts by mass, or less than 4 parts by mass, and may be in the range between the two values exemplified herein. The adhesive composition according to one embodiment of the present invention may not contain the plasticizer.

Examples of the plasticizer include phthalic acid ester-based plasticizers, polybutene, paraffin-based process oils, naphthene-based process oils, aromatic process oils, liquid paraffin, and hydrocarbon-based synthetic oils.

Examples of the polybutene include homopolymers of isobutene, and copolymers of isobutene and n-butene. Examples of commercially available products of the polybutene include "10N" made by Nippon Oil & Fats Co., Ltd., "Indopol H-100" made by Ineos, "Nisseki polybutene" made by Shin Nihon Oil Co., Ltd., and "Tetrax" made by Shin Nihon Oil Co., Ltd.

Examples of the paraffin-based process oil include "PW-32" made by Idemitsu Kosan Co., Ltd., "Diana Fresia S-32" made by Idemitsu Kosan Co., Ltd., and "PS-32" made by Idemitsu Kosan Co., Ltd.

Examples of the naphthene-based process oil include "KN4010" made by PetroChina Company Limited, "Diana Fresia N28" made by Idemitsu Kosan Co., Ltd., "Diana Fresia N90" made by Idemitsu Kosan Co., Ltd., "Diana Fresia U46" made by Idemitsu Kosan Co., Ltd., and "Diana Process Oil NR" made by Idemitsu Kosan Co., Ltd.

Examples of the aromatic process oil include "Aromax" manufactured by Shin Nihon Oil Co., Ltd.

Examples of the liquid paraffin include "P-100" made by MORESCO Corporation, and "Kaydol" made by Sonneborn LLC.

Examples of the hydrocarbon-based synthetic oil include "LUCANT HC-10" made by Mitsui Chemicals, Inc. and "LUCANT HC-20" made by Mitsui Chemicals, Inc.

Examples of the phthalic acid ester-based plasticizer include DINA (diisononyl adipate), DEHP (di-(2-ethylhexyl) phthalate), DBP (dibutyl phthalate), BBP (butyl benzyl phthalate), DINP (diisononyl phthalate), DIDP (diisodecyl phthalate) and DNOP (dinormal octyl phthalate).

As for the adhesive composition according to one embodiment of the present invention, the total content of the above-exemplified plasticizers is preferably within the above-described numerical range. In addition, as for the adhesive composition according to one embodiment of the present invention, in particular, the total content of phthalic acid ester-based plasticizers is preferably within the above-described numerical range.

### (Antioxidant and Ultraviolet Absorber)

Examples of the antioxidant include phenol-based antioxidants such as 2,6-di-t-butyl-4-methylphenol, n-octadecyl-3-(4'-hydroxy-3',5'-di-t-butylphenyl) propionate, 2,2'-methylene bis(4-methyl-6-t-butylphenol), 2,2'-methylene bis(4-ethyl-6-t-butylphenol), 2,4-bis(octylthiomethyl)-o-cresol, 2-t-butyl-6-(3-t-butyl-2-hydroxy -5-methylbenzyl)-4-methylphenyl acrylate, 2,4-di-t-amyl-6-[1-(3,5-di-t-amyl-2-hydroxyphenyl)ethyl] phenyl acrylate, 2-[1-(2-hydroxy-3,5-di-tert-pentylphenyl)]acrylate, tetrakis[methylene-3-(3,5-di-tert-butyl-4-hydroxyphenyl)propionate methane, and 2,4-bis[(dodecylthio)methyl]-6-methylphenol; sulfur-based antioxidants such as dilaurylthiodipropionate, laurylstearylthiodipropionate, and pentaerythritol tetrakis(3-laurylthiopropionate); phosphorus-based antioxidants such as tris(nonylphenyl)phosphite and tris(2,4-di-t-butylphenyl)phosphite; and lactone-based antioxidants. Examples of the ultraviolet absorber include benzotriazole-based ultraviolet absorbers such as 2-(2'-hydroxy-5'-methylphenyl)benzotriazole, 2-(2'-hydroxy-3',5'-di-t-butylphenyl)benzotriazole, and 2-(2'-hydroxy-3',5'-dit-butylphenyl)-5-chlorobenzotriazole; benzophenone-based ultraviolet absorbers such as 2-hydroxy-4-methoxybenzophenone; salicylic acid ester-based ultraviolet absorbers; cyanoacrylate-based ultraviolet absorbers; and hindered amine-based light stabilizers. These can be used alone or in combination.

The content of the antioxidant can be, for example, 0.1, 0.2, 0.3, 0.4, 0.5, 1.0, 1.5, 2.0, 2.5, 3.0, or 3.5 parts by mass, per 100 parts by mass of the adhesive composition according to one embodiment of the present invention, and may be in the range between the two values exemplified herein.

### (Filler)

The filler is not particularly limited. Examples of the filler include calcium carbonate, kaolin, talc, titanium oxide, mica, styrene beads, and silica. These fine particle fillers can be used alone, or can be mixed and used.

### 1.7 Production Method

The production method of the adhesive composition according to one embodiment of the present invention is not particularly limited. For example, the production method of the adhesive composition according to one embodiment of the present invention can include a step of kneading tackifiers and the like in which raw materials including the styrene-butadiene-based block copolymer, the first tackifier, the second tackifier, and the third tackifier are kneaded in a kneader. The antioxidant or the plasticizer can also be further added in the above-described step.

In the step of kneading tackifiers and the like, for example, kneading can be performed for 3 to 30 minutes at 5 to 25 rpm.

The production method of the adhesive composition according to one embodiment of the present invention preferably include a step of adding and kneading the styrene-butadiene-based block copolymer in which the styrene-butadiene-based block copolymer is further added and kneaded after the above-described step of kneading tackifiers and the like. In the step of adding and kneading the styrene-butadiene-based block copolymer, for example, kneading can be performed for 20 to 200 minutes at 5 to 25 rpm.

### 2. Adhesive Layer and Adhesive Tape

The adhesive tape according to the present invention comprises an adhesive layer containing the above-described adhesive composition. The adhesive tape according to the present invention comprises a nonwoven fabric coated with the adhesive composition by hot-melt coating, the nonwoven fabric containing rayon.

The adhesive layer is formed by heating and melting the adhesive composition by a melter, for example, and coating the base material with that. The coating method is not particularly limited. Preferably, the raw materials of the adhesive composition are heated, melted, and kneaded to apply it by a hot-melt method. In other words, the production method of the adhesive tape according to one embodiment of the present invention preferably includes a coating step in which the above-described adhesive composition is applied to a base material by a hot-melt method.

Since conventional adhesive tapes for the automotive field and the like had a step of applying an adhesive composition in which an adhesive is dissolved in a medium such as solvent or water to a base material and then volatilizing the solvent or water, large amounts of energy and cost were required for production, leading to long production time. Since the adhesive composition according to the present invention has a low viscosity at a high temperature and coating by the hot-melt method can be performed, it is possible to produce the adhesive tape with less energy and cost and in shorter time.

As a coating method, a non-contact coating method or a contact method can be employed. Examples of the non-contact coating method include cross coating. Examples of the contact method include slot die coating.

The thickness of the nonwoven fabric containing rayon is preferably 30 to 50 µm. The thickness of the nonwoven fabric containing rayon is, for example, 30, 31, 32, 33, 34, 35, 36, 37, 38, 39, 40, 41, 42, 43, 44, 45, 46, 47, 48, 49, or 50 µm, and may be in the range between the two values exemplified herein. The adhesive tape tends to have an excellent balance between the adhesive force and the constant load peeling amount by making the thickness of the nonwoven fabric containing rayon within the above-described numerical range.

As an example, the nonwoven fabric containing rayon can be the nonwoven fabric containing at least wood fiber and rayon. The nonwoven fabric containing rayon in the present invention may contain the fiber other than rayon and wood fiber, and may also contain a chemical fiber such as an acetate fiber, a polyester fiber, a polyvinyl alcohol (PVA) fiber, a polyamide fiber, a polyolefin fiber, and a polyurethane fiber. In addition, a resin (binder) such as viscose, PVA, and polyacrylamide may be impregnated. As for these nonwoven fabrics containing rayon, the basis weight of 10 to 60 g/m² can be preferably used. The basis weight is, for example, 10, 15, 20, 25, 30, 35, 40, 45, 50, 55, or 60 g/m², and may be in the range between the two values exemplified herein. In particular, the thickness of 30 to 50 µm can be preferably used.

The coating amount of the adhesive composition can be 60 g/m² or more per side, and is preferably 60 to 70 g/m². The coating amount is, for example, 60, 61, 62, 63, 64, 65, 66, 67, 68, 69, 70, 71, 72, 73, 74, 75, 76, 77, 78, 79, or 80 g/m² per side, and may be in the range between the two values exemplified herein. The adhesive tape tends to have the excellent balance between the adhesive force and the constant load peeling amount at a high temperature by making the coating amount of the adhesive composition within the above-described numerical range.

The coating amount of the adhesive composition can be measured by removing the adhesive from the tape after coating with a solvent, measuring the weight of the base material after drying, and subtracting this weight from the overall weight of the tape, as well as dividing the weight by two in the case of double-sided tape.

The thickness of the adhesive layer can be 50 to 100 µm per side. The thickness of the adhesive layer is, specifically for example, 50, 55, 60, 65, 70, 75, 80, 85, 90, 95, or 100 µm, and may be in the range between the two values exemplified herein. When attempting to form the thick adhesive layer with the conventional solvent-based adhesive composition, the drying step was longer depending on the thickness, which increased the consumed energy and cost. However, since the viscosity of the adhesive composition according to the present invention at a high temperature is within a specific range and coating by a hot-melt method can be performed, the adhesive layer having relatively large thickness can be produced with less energy and cost and in shorter time than the conventional adhesive composition. The thickness in the present invention can be measured by subtracting the thickness of the base material from the layer thickness of the tape, and in the case of double-sided tape, by dividing the thickness by two. As the thickness measuring machine, a spring-type dial gauge specified in JIS B 7503 is used with a measuring pressure of 20 to 60 kPa. As such a dial gauge, PEACOCK made by OZAKI MFG. CO., LTD. is commercially available.

Preferably, the adhesive tape according to the present invention is a double-sided tape having the adhesive layers on both surfaces of the nonwoven fabric. More preferably, the adhesive tape according to the present invention has the adhesive layers with the above-described thickness on both surfaces of the nonwoven fabric.

The configuration of the adhesive tape according to one embodiment of the present invention is shown in Fig. 1. The adhesive tape has an adhesive layer 2 and an adhesive layer 4, both having the thickness of 50 to 100 µm, on both surfaces of a nonwoven fabric 3. A double-sided release film 1 is attached to the surface of the adhesive layer 2 opposite to the surface in contact with the nonwoven fabric.

### 2.1 Adhesive Force

As for the adhesive tape according to the present invention, the adhesive force at 80°C to a PP board (polypropylene board) can be 12 N/19mm or higher, and is preferably 14 N/19mm or higher. The adhesive force is, specifically for example, 12, 13, 14, 15, 16, 17, 18, 19, 20, 21, 22, 23, 24, 25, 26, 27, 28, 29, 30, 35, or 40 N/19 mm, and may be in the range between the two values exemplified herein.

The adhesive force can be controlled by adjusting the kind and amount of the adhesive composition blending. The adhesive force can be determined by measuring the 180° peel adhesive force to a PP board under an atmosphere at 80°C based on the method described in Examples.

### 2.2 Constant Load Peeling Amount

The constant load peeling amount of the adhesive tape according to the present invention is 3 mm or more, and more preferably 5 mm or more, when the adhesive tape is pressure-bonded to a PP board at 80°C for 30 minutes with a load of 2 kg. The constant load peeling amount is, specifically for example, 3, 5, 10, 11, 12, 13, 14, 15, 16, 17, 18, 19, 20, 25, 30, 35, or 40 mm, and may be in the range between the two values exemplified herein. The constant load peeling amount can be measured by the method described in Examples.

The adhesive force and constant load peeling amount of the adhesive tape can be controlled by adjusting the kind and amount of the adhesive composition blending as well as the kind of the base material, thickness, coating amount and the like of the adhesive tape.

The adhesive tape according to the present invention has high adhesive force to a PP board at a high temperature and a good adhesive property at a high temperature. By taking advantage of these characteristics, the adhesive tape according to the present invention can be used in various industrial fields such as home appliances, automobiles, and construction, to adhere various components to each other more reliably and at lower cost. The adhesive tape according to one embodiment of the present invention can be preferably used, for example, to fix parts around doors, ceilings, trunk rooms, and instrument panels of automobiles, to fix interior parts in the automotive field such as assembly around air conditioners and car navigation systems, and for office automation equipment and home appliances.

### Example

Hereinafter, the present invention will be explained in further detail based on Examples. The present invention is not construed as limited thereto.

### (Preparation of Adhesive Composition)

The temperature of the kneader (made by Toshin Co., Ltd.) was raised to 200°C in advance. The first tackifier, the second tackifier, and the third tackifier were added to the kneader and kneaded at 15 rpm for 10 minutes. Then, the block copolymer was added and further kneaded at 15 rpm for 100 minutes to obtain the adhesive compositions 1 to 15. The blending amounts (parts by mass) of each component are shown in Table 2. It should be noted that the viscosity of the first tackifier in the tables is the viscosity at 25°C. In addition, both of Asaprene and Tuftec, which are the block copolymers used in Examples and Comparative Examples, are the styrene-butadiene-butylene-styrene block copolymers (SBBS) in which the butadiene portion is partially hydrogenated.

The softening point and the like of the component used as the second tackifier are shown below.
PX1150N (made by YASUHARA CHEMICAL CO., LTD.): terpene resin, softening point of 115±5°C

The softening point and the like of the component used as the third tackifier are shown below.

T-145 (made by YASUHARA CHEMICAL CO., LTD.): terpene phenolic resin, softening point of 145±5°C

### (Production of Adhesive Tape (Double-sided Tape))

The adhesive compositions 1 to 15 were heated to 200°C by a melter to dissolve, applied onto the base material described in the tables using a slot die coater (ITW Dynatec K.K) to achieve the coating amount described in the tables, attached to a double-sided release paper, and rolled. Furthermore, the adhesive composition was likewise applied onto the surface not coated with the adhesive composition using a slot die coater (ITW Dynatec K.K) to achieve the coating amount described in the table.
Base Material No. 1: wood pulp/rayon nonwoven fabric (made by DAIFUKU PAPER MFG. Co., Ltd, 5230), basis weight 13 g/m², thickness (mm) 45 µm
Base Material No. 2: wood pulp/rayon nonwoven fabric (made by DAIFUKU PAPER MFG. Co., Ltd, 5211), basis weight 11 g/m², thickness (mm) 33 µm
Base Material No. 3: wood pulp/rayon nonwoven fabric (made by DAIFUKU PAPER MFG. Co., Ltd, 5232), basis weight 14 g/m², thickness (mm) 135 µm
Base Material No. 4: wood pulp nonwoven fabric (made by DAIFUKU PAPER MFG. Co., Ltd, 5310), basis weight 11 g/m², thickness (mm) 30 µm
Base Material No. 5: wood pulp nonwoven fabric (made by DAIFUKU PAPER MFG. Co., Ltd, 5235), basis weight 14 g/m², thickness (mm) 43 µm
Base Material No. 6: PET film (made by Toray Industries, Inc., Lumirror T60), thickness 38 µm

### (Evaluation)

The following evaluations were performed.

### <GPC Analysis of Styrene-butadiene-based Block Copolymer>

The styrene-butadiene-based block copolymers used to prepare each adhesive composition were analyzed using GPC under the following conditions. The results are shown in Table 1.
Equipment: Shodex GPC-101
Mobile Phase: THF
Temperature: 40°C
Flow rate: 1 mL/min
Column: PL gel MIXED-B ×3
Sample Concentration: 2.0 mg/mL (0.2%)

As shown in Table 1, each of the styrene-butadiene-based block copolymers used had two component peaks of the peak top molecular weight in the GPC analysis. The molecular weight in this measurement is the molecular weight in terms of polystyrene.

### <MFR of Styrene-butadiene-based Block Copolymer>

The melt mass flow rate (MFR) values of each styrene-butadiene-based block copolymer product at 200°C and under 5 kgf are shown in Table 2.

### <Adhesive Force of Adhesive Tape>

The adhesive force to a PP board (180° peel adhesive force) was measured under an atmosphere at 80°C. First, a 25 µm-thick PET film was attached to one surface of the double-sided adhesive tape, and the other surface of the tape was attached to a PP board and pressure-bonded with a weight of 2 kg. This sample was set on an autograph. After 30 minutes, the adhesive force was measured. The results are shown in Table 2. The PP board used for this measurement was a 2 mm-thick sheet of KOBE POLYSHEET (product number: PP-N-BN, made by Showa Denko Materials Co., Ltd.) punched out to 5 cm × 20 cm.

### <Constant Load Peeling Amount of Adhesive Tape>

The constant load peeling amount to a PP board of 50 mm × 200 mm × 2 mm was evaluated. First, a 25 µm-thick PET film was attached to one surface of the double-sided tape and punched into a rectangular strip of 20 mm × 100 mm. Next, the adhesive surface of 20 mm × 50 mm, opposite to the surface where the PET film is attached was attached to the PP board from the edge, and pressure-bonded by moving back and forth once with a load of 2 kg. The PP board was placed horizontally in the measurement environment (80°C) with the surface where the adhesive surface is attached faced downward. After 10 minutes of holding, a weight of 100 g was suspended at the edge of the adhesive tape that was not attached to the PP board, and a load was applied vertically. The peeling length (peeling amount) was measured after 30 minutes. The results are shown in Table 2.

### [Table 1]

**Table 1**

| Product Name | Component | Result of Molecular Weight Measurement |
|---|---|---|
| Asaprene N521 (Asahi Kasei) | Styrene 25 mass% /Diblock 60 mass% /MFR2 | 235000, 79000 (2 compoments) |
| Asaprene N515 (Asahi Kasei) | Styrene 16 mass% /Diblock 65mass% /MFR3 | 302000, 100000 (2 compoments) |
| Tuftec P1083 (Asahi Kasei) | Styrene 20 mass% /MFR11 | 110000, 50000, 8000 (3 compoments) |
| Tuftec P1500 (Asahi Kasei) | Styrene 30 mass% /Diblock 65 mass% /MFR15 | 125000, 65000, 13000 (3 compoments) |
| Tuftec P5051 (Asahi Kasei) | Styrene 47 mass% /MFR11 | 1050000, 53000, 11000 (3 compoments) |
| Tuftec P2000 (Asahi Kasei) | Styrene 67 mass% /MFR11 | 110000, 62000, 12000 (3 compoments) |

**[Table 2]**

| Table 2 | | | | | | | | | | | | | | Comparative Example | | | | |
|---|---|---|---|---|---|---|---|---|---|---|---|---|---|---|---|---|---|---|
| | Component | Product Name | Component | Adhesive Composition | | | | | | | | | | | | | | |
| | | | | 1 | 2 | 3 | 4 | 5 | 6 | 7 | 8 | 9 | 10 | 11 | 12 | 13 | 14 | 15 |
| | Styrene-butadiene-based Block Copolymer | Asaprene N521 (Asahi Kasei) | Styrene 25 mass% /Diblock 60 mass% /MFR2 | 45 | 35 | 25 | 15 | 45 | 45 | 35 | 35 | 35 | 35 | 35 | 35 | 35 | 35 | 0 |
| | | Asaprene N515 (Asahi Kasei) | Styrene 16 mass% /Diblock 65 mass% /MFR3 | 0 | 0 | 0 | 0 | 0 | 0 | 0 | 0 | 0 | 0 | 0 | 0 | 0 | 0 | 35 |
| | | Tuftec P1083 (Asahi Kasei) | Styrene 20 mass% /MFR11 | 0 | 0 | 0 | 0 | 0 | 0 | 0 | 0 | 0 | 0 | 0 | 0 | 0 | 15 | 0 |
| | | Tuftec P1500 (Asahi Kasei) | Styrene 30 mass% /Diblock 65 mass% /MFR15 | 5 | 15 | 25 | 35 | 0 | 0 | 15 | 15 | 15 | 15 | 15 | 15 | 15 | 0 | 15 |
| Adhesive Composition Blending | | Tuftec P5051 (Asahi Kasei) | Styrene 47 mass% /MFR11 | 0 | 0 | 0 | 0 | 5 | 0 | 0 | 0 | 0 | 0 | 0 | 0 | 0 | 0 | 0 |
| | | Tuftec P2000 (Asahi Kasei) | Styrene 67 mass% /MFR11 | 0 | 0 | 0 | 0 | 0 | 5 | 0 | 0 | 0 | 0 | 0 | 0 | 0 | 0 | 0 |
| | | Styrene Content of Styrene-butadiene-based Block Copolymer (mass%) | | 25.5 | 26.5 | 27.5 | 28.5 | 27.2 | 29.2 | 26.5 | 26.5 | 26.5 | 26.5 | 26.5 | 26.5 | 26.5 | 23.5 | 20.2 |
| | First Tackifier (Liquid at 23'C) | YS Resin LP (Viscosity: 2000 cp) | Terpene Resin | 10 | 10 | 10 | 10 | 10 | 10 | 10 | 10 | 10 | 10 | 10 | 10 | 10 | 10 | 10 |
| | Second tackifier (Softening Point: 120°C or Lower) | PX1150N YASUHARA CHEMICAL | Terpene Resin | 20 | 20 | 20 | 20 | 20 | 20 | 20 | 20 | 20 | 20 | 20 | 20 | 20 | 20 | 20 |
| | Third tackifier (Softening Point: 140°C or Higher) | T-145 (Softening Point: 145°C) YASUHARA CHEMICAL | Terpene Phenolic Resin | 19.5 | 19.5 | 19.5 | 19.5 | 19.5 | 19.5 | 19.5 | 19.5 | 19.5 | 19.5 | 19.5 | 19.5 | 19.5 | 19.5 | 19.5 |
| | Antioxidant | Iraanox1726 | Antioxidant | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Toatal (g) | | | | 100 | 100 | 100 | 100 | 100 | 100 | 100 | 100 | 100 | 100 | 100 | 100 | 100 | 100 | 100 |
| Base Material | | | Base Material No. | 1 | 1 | 1 | 1 | 1 | 1 | 2 | 3 | 1 | 1 | 4 | 5 | 6 | 1 | 1 |
| | | | Thickness (µm) | 45 | 45 | 45 | 45 | 45 | 45 | 33 | 135 | 45 | 45 | 30 | 43 | 38 | 45 | 45 |
| | | | Material | wood pulp/r ayon | wood pulp/r ayon | wood pulp/r ayon | wood pulp/r ayon | wood pulp/r ayon | wood pulp/r ayon | wood pulp/r ayon | wood pulp/r ayon | wood pulp/r ayon | wood pulp/r ayon | wood pulp | wood pulp | PET | wood pulp/ray on | wood pulp/ray on |
| Coating Amount of Adhesive (g/m²) per Side | | | | 65 | 65 | 65 | 65 | 65 | 65 | 65 | 65 | 45 | 75 | 65 | 65 | 65 | 65 | 65 |
| Property of Double-sided Tape | Adhesive Force (N/19mm) PP Board | | | 28 | 34 | 34 | 30 | 30 | 30 | 30 | 25 | 28 | 14 | 20 | 20 | 20 | 34 | 34 |
| | Constant Load Peeling Amount mm (PP) 80°C 30 minutes | | | 20 | 20 | 18 | 25 | 20 | 20 | 20 | 25 | 30 | 5 | Dropped | Dropped | Dropped | Dropped | Dropped |

## Claims

1. An adhesive tape comprising an adhesive layer containing an adhesive composition, wherein:
the adhesive composition contains a styrene-butadiene-based block copolymer, a first tackifier, a second tackifier, and a third tackifier;
a butadiene portion of the styrene-butadiene-based copolymer is partially hydrogenated;
a content of a styrene-derived monomer unit of the styrene-butadiene-based copolymer is 24 mass% or more;
in GPC measurement, the styrene-butadiene-based copolymer contains a component (a) having a peak top molecular weight of 200000 or higher and 400000 or lower, measured by the method disclosed in the description, and a component (b) having a peak top molecular weight of 100000 or higher and lower than 200000;
the first tackifier is a terpene-based resin which is liquid at 23°C;
the second tackifier has a softening point of 70 to 120°C;
the third tackifier is a terpene phenolic resin having a softening point of 140°C or higher, measured in accordance with the softening point test method (ring and ball method) stipulated in JIS K5902 and JIS K2207; and
the adhesive tape comprises a nonwoven fabric coated with the adhesive composition by hot-melt coating, the nonwoven fabric containing rayon.

2. The adhesive tape of Claim 1, wherein a thickness of the nonwoven fabric containing rayon is 30 to 50 µm.

3. The adhesive tape of Claim 1 or 2, wherein a coating amount of the adhesive composition is 60 g/m² or more per side.

## Patentansprüche

1. Klebeband, umfassend eine Klebeschicht, die eine Klebstoffzusammensetzung enthält, wobei:
die Klebstoffzusammensetzung ein Blockcopolymer auf Styrol-Butadien-Basis, einen ersten Klebrigmacher, einen zweiten Klebrigmacher und einen dritten Klebrigmacher enthält;
ein Butadienanteil des Copolymers auf Styrol-Butadien-Basis teilweise hydrogeniert ist;
ein Gehalt einer von Styrol abgeleiteten Monomereinheit des Copolymers auf Styrol-Butadien-Basis 24 Masse-% oder mehr beträgt;
bei einer GPC-Messung das Copolymer auf Styrol-Butadien-Basis eine Komponente (a) mit einem Peak-Spitzenmolekulargewicht von 200000 oder höher und 400000 oder niedriger, gemessen durch das in der Beschreibung offenbarte Verfahren, und eine Komponente (b) mit einem Peak-Spitzenmolekulargewicht von 100000 oder höher und niedriger als 200000 enthält;
der erste Klebrigmacher ein Harz auf Terpenbasis ist, das bei 23 °C flüssig ist;
der zweite Klebrigmacher einen Erweichungspunkt von 70 bis 120 °C aufweist;
der dritte Klebrigmacher ein Terpenphenolharz mit einem Erweichungspunkt von 140 °C oder höher ist, gemessen gemäß dem in JIS K5902 und JIS K2207 vorgeschriebenen Erweichungspunkttestverfahren (Ring- und Kugelverfahren); und
das Klebeband einen Vliesstoff umfasst, der mit der Klebstoffzusammensetzung durch Heißschmelzbeschichtung beschichtet ist, wobei der Vliesstoff Rayon enthält.

2. Klebeband nach Anspruch 1, wobei eine Dicke des Vliesstoffs, der Rayon enthält, 30 bis 50 µm beträgt.

3. Klebeband nach Anspruch 1 oder 2, wobei eine Beschichtungsmenge der Klebstoffzusammensetzung 60 g/m² oder mehr pro Seite beträgt.

## Revendications

1. Ruban adhésif comprenant une couche adhésive contenant une composition adhésive, dans lequel :
la composition adhésive contient un copolymère séquencé à base de styrène et de butadiène, un premier agent adhésif, un deuxième agent adhésif et un troisième agent adhésif ;
une partie butadiène du copolymère à base de styrène et de butadiène est partiellement hydrogénée ;
une teneur en une unité monomère dérivée du styrène du copolymère à base de styrène et de butadiène est égale ou supérieure à 24 % en masse ;
dans la mesure GPC, le copolymère à base de styrène et de butadiène contient un composant (a) ayant un poids moléculaire de sommet de pic de 200000 ou plus et de 400000 ou moins, mesurée par le procédé divulgué dans la description, et un composant (b) ayant un poids moléculaire de sommet de pic de 100000 ou plus et de moins de 200000 ;
le premier agent adhésif est une résine à base de terpène qui est liquide à 23°C ;
le deuxième agent adhésif a un point de ramollissement compris entre 70 et 120°C ;
le troisième agent adhésif est une résine phénolique terpénique ayant un point de ramollissement de 140°C ou plus, mesuré conformément au procédé d'essai du point de ramollissement (méthode d'anneau et de bille) stipulé dans JIS K5902 et JIS K2207 ; et
le ruban adhésif comprend un tissu non tissé revêtu de la composition adhésive par revêtement thermofusible, le tissu non tissé contenant de la rayonne.

2. Ruban adhésif de la revendication 1, dans lequel une épaisseur du tissu non tissé contenant de la rayonne est comprise entre 30 et 50 µm.

3. Ruban adhésif de la revendication 1 ou 2, dans lequel une quantité de revêtement de la composition adhésive est de 60 g/m² ou plus par côté.
